# EUROPEAN PATENT SPECIFICATION

(11) **EP 1 983 289 B1**
(45) Date of publication and mention of the grant of the patent: **24.08.2011**
(21) Application number: 08200006.8
(22) Date of filing: 15.02.2008
(51) Int. Cl.: F28F 13/06, F28D 1/053

(54) **Heat exchangers**
Wärmetauscher
Échangeurs thermiques

(30) Priority: 19.03.2007 GB 0705210
(43) Date of publication of application: 22.10.2008
(73) Proprietor: Land Rover, Gaydon Warwick Warwickshire CV35 0RR (GB)
(72) Inventor: Hutchins, William, Keniworth, Warwickshire, CV8 1PP (GB)
(74) Representative: Holmes, Matthew William

(56) References cited:
- EP-A- 0 108 479
- EP-A- 0 811 821
- FR-A- 2 478 806
- JP-A- 11 287 589

## Description

The invention relates to heat exchangers, particularly but not exclusively to engine cooling system radiators.

A heat exchanger as defined in the preamble of claim 1 is disclosed in EP-A1-0108479.

Heat exchangers, particularly those used as engine cooling system radiators, often comprise a generally rectangular heat exchanger matrix, an inlet header tank and an outlet header tank each at a respective one of one pair of opposite side edges of the matrix and a pair of side plates each arranged at an a respective one of the other pair of opposite side edges of the matrix. The matrix comprises a number of tubes extending in a parallel array between the tanks to provide a path for liquid coolant to flow from one tank to the other. Cooling fins are arranged between adjacent pairs of tubes and between each side plate and the adjacent tube such that in use air flows between adjacent pairs of tubes and between each side plate and its adjacent tube.

A problem with the heat exchangers described above is that the tubes which are adjacent the side plates may be overcooled since it is common to provide the same size and type of fins between these components as are used between adjacent pairs of tubes. The fins situated between a side plate and an adjacent tube can conduct heat away from one tube only while the fins situated between adjacent pairs of tubes have to conduct heat away from two tubes. This overcooling can be particularly noticeable if the heat exchanger is arranged with the tubes horizontal and the header tanks vertical (a so-called cross-flow radiator). Where there is a relatively low rate of flow of liquid coolant and high air flow such as is encountered in a motor vehicle during gentle open-road cruising, the hotter coolant tends to rise by convection to the upper tubes. The difference in temperature between the uppermost tube (i.e., the one adjacent the uppermost side plate) and the next tube down can lead to stress cracking of the tubes or tube to header tank joint with a subsequent loss of coolant.

The present invention seeks to prevent or alleviate the above problem.

According to the invention, there is provided a heat exchanger comprising a generally rectangular heat exchanger matrix, an inlet header tank and an outlet header tank each at a respective one of one pair of opposite side edges of the matrix and a pair of side plates each arranged at an a respective one of the other pair of opposite side edges of the matrix, the matrix comprising a number of tubes extending in a parallel array between the tanks to provide a path for liquid to flow from one tank to the other and cooling fins arranged between adjacent pairs of tubes and between each side plate and the adjacent tube such that in use air flows between adjacent pairs of tubes and between each side plate and the adjacent tube, wherein heat transfer restrictor means are provided to restrict the transfer of heat from the tube adjacent one of the side plates to the air flow between said one side plate and the said tube.

Preferably the heat transfer restrictor means comprises a restrictor plate arranged on at least one of the side plates to restrict the flow of air between said one side plate and the adjacent tube.

Advantageously, the restrictor plate comprises a blanking plate having cut-out gaps or castellations, the blanking plate in use blocking the flow of air between the side plate and the adjacent tube over part of its length and allowing air to flow through the gaps over the remainder of its length. Alternatively, the restrictor plate comprises a blanking plate having perforations to restrict the flow of air between the side plate and the adjacent tube or may comprise a strip of constant width that extends the length of the side plate and over part of the gap between the side pale and the adjacent tube to leave a narrow slit for air to pass through. The restrictor plate may be attached to or form part of a cooling fan cowl.

The invention will now be described by way of example and with reference to the accompanying drawings, in which:
Fig.1 is a perspective view of part of a vehicle heat exchanger according to the invention;
Fig.2 is a perspective view based on Fig.1 but to a larger scale showing part of a conventional vehicle heat exchanger;
Fig.3 is a cross-section on the line III-III in Fig.2 showing airflow and heat transfer in part of the conventional heat exchanger; and
Fig.4 is a cross-section based on Fig.3 and showing airflow and heat transfer in part of the heat exchanger shown in Fig.1.

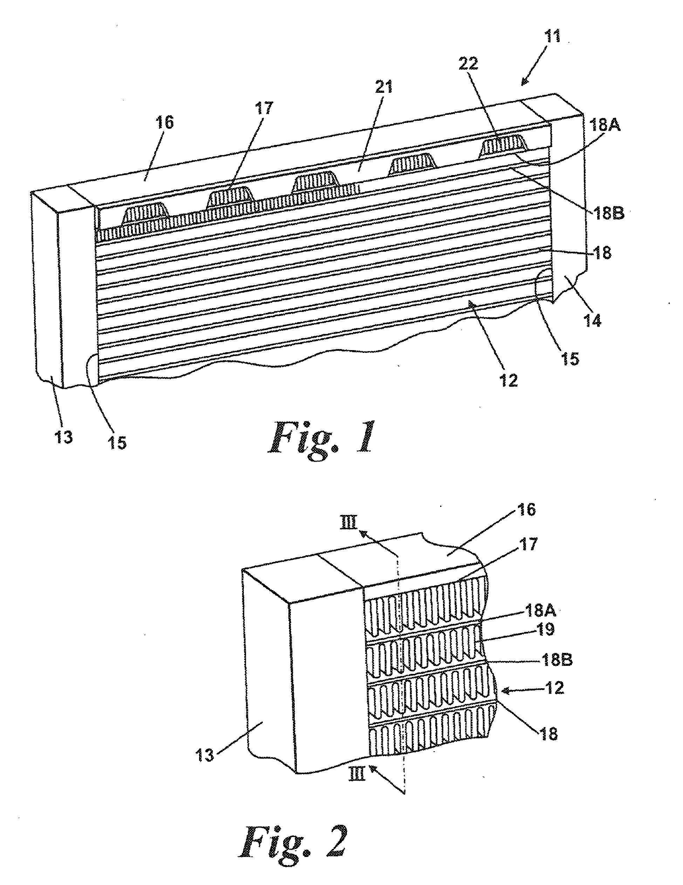

The vehicle heat exchanger 11 shown in Fig.1 is a cross-flow radiator for an engine cooling system. It comprises a generally rectangular heat exchanger matrix 12, an inlet header tank 13 and an outlet header tank 14, each at a respective one of one pair of opposite side edges 15 of the matrix 12. A side plate 16 is arranged at the upper of the other pair of opposite side edges 17 of the matrix 12, there being a corresponding side plate 16 arranged at the opposite, lower, side edge (not shown). The matrix 12 comprises a number of tubes 18 which extend in a parallel array between the tanks 13, 14 to provide a path for liquid coolant to flow from one tank to the other. Cooling fins 19 are arranged between adjacent pairs of the tubes 18 and between each side plate 16 and the adjacent tube such that in use air flows not only between adjacent pairs of tubes but also between each side plate and its adjacent tube. As is best seen in the conventional heat exchanger shown in Fig.2, the fins 19 are in the form of a flat strip bent into a corrugated or serpentine formation with the crests bonded to the tubes to aid conduction. As a production expedient, the fins 19 are identical throughout the matrix 12 so that the fins between each side plate 16 and its adjacent tube 18 are the same as those between adjacent tubes.

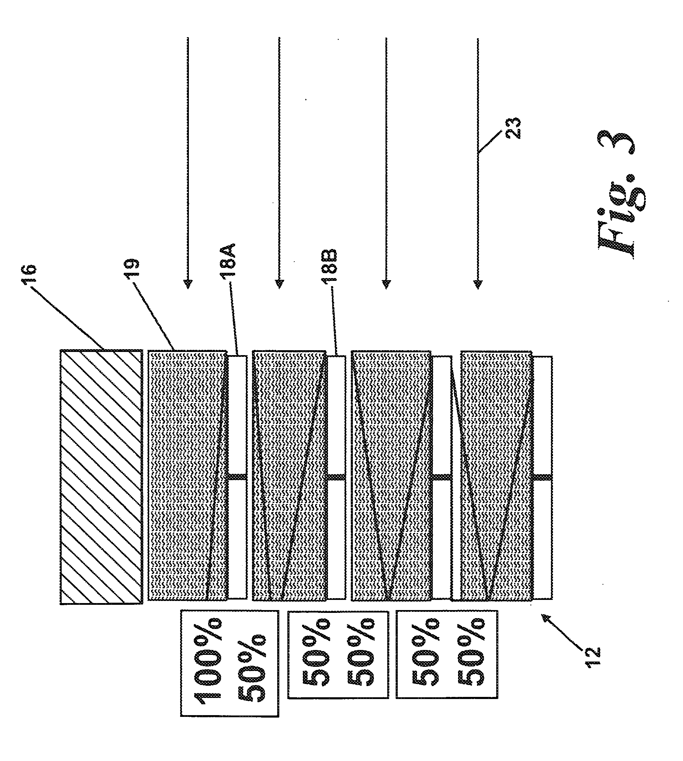

Fig.3 shows how, in the conventional heat exchanger shown in Fig.2, heat is transferred from the tubes 18 into the streams of air flowing through the matrix 12, the streams being indicated by arrows 23. The air flow between the side plate 16 and its adjacent (uppermost) tube 18A is substantially the same as between each pair of adjacent tubes. The fins 19 between the uppermost tube 18A and the tube 18B immediately below it transfer heat from both of these tubes, 18A and 18B. However, the fins 19 between the uppermost tube 18A and the side plate 16 transfer heat from only the one tube 18A. In Fig.3, this is illustrated by the darker shading above and below each tube 18. The fins 19 above the uppermost tube 18A take 100% of their heat from that tube whereas the fins below take 50% of their heat from the tube 18A above and 50% from the tube 18B below. As previously indicated, the drawback of this unequal heat transfer is that the uppermost tube 18A runs colder than its adjacent tube 18B so that the different expansion rates create stresses that can result in structural failure.

In the heat exchanger shown in Fig.1, a restrictor plate 21 is arranged on the upper side plate 16 to restrict the flow of air between that side plate and the adjacent uppermost tube 18A. This restrictor plate 21 is shown as being attached to the side plate 16 (e.g. by adhesives, riveting or by welding). However, the restrictor plate 21 could be formed as part of the side plate 16 or be part of or attached to a fan cowl of any known type, e.g. as shown in EP-A-0108479. The restrictor plate 21 is in the form of a rectangular blanking plate which blocks the flow of air between the side plate 16 and the uppermost tube 18A over part of its length and allows air to flow through cut-out gaps or castellations 22 over the remainder. By this means it is relatively easy to calculate a 50% reduction in heat transfer through the fins above the uppermost tube 18A by simply blocking the air flow over 50% of their length.

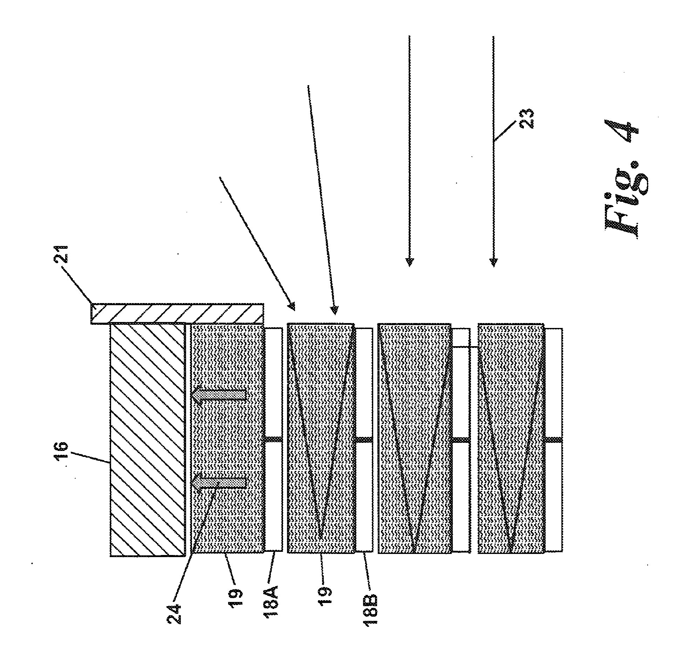

Other forms of opening can be arranged in the restrictor plate 21, e.g. circular holes, saw tooth design or perforations. Alternatively, there may be no openings as such but instead the restrictor plate 21 may be a plain rectangular strip of constant width that extends horizontally the length of the side plate 16 and vertically over part of the gap between the side pale and the adjacent tube to leave a narrow slit for air to pass through. Also, the restrictor plate could be arranged on the downstream (relative to the airflow) side of the side plate 16 or there could be a restrictor plate on both sides, e.g. forming the sides of a channel section. Indeed, other heat transfer restrictor means may be provided to restrict the transfer of heat from the tube adjacent the side plate to the air flow between the side plate and the tube. For example, the fins 19 may be reduced in number or in length to reduce their ability to transfer heat from the tube to the airflow. However, restricting the air flow between the side plate and the adjacent tube has the advantage that the side rail 16 itself can receive heat from the adjacent tube as indicated by the broad arrows 24 in fig.4. This can in itself reduce thermal stresses by allowing the side rail 16 some thermal expansion.

Although the restrictor plate 21 and its variations and equivalents have been described in relation to the top (upstream) side plate of a cross-flow radiator, it may also be used on the lower (downstream) side plate if necessary or on the side plates of a vertical flow radiator. However, the problem of thermal expansion is usually much less in these areas. Other heat exchangers may also benefit, e.g. air conditioning condensers.

## Claims

1. A heat exchanger (11) comprising a generally rectangular heat exchanger matrix (12), an inlet header tank (13) and an outlet header tank (14) each at a respective one of one pair of opposite side edges (15) of the matrix (12) and a pair of side plates (16) each arranged at an a respective one of the other pair of opposite side edges (17) of the matrix (12), the matrix (12) comprising a number of tubes (18) extending in a parallel array between the tanks (13, 14) to provide a path for liquid to flow from one tank to the other and cooling fins (19) arranged between adjacent pairs of tubes (18) and between each side plate (16) and the adjacent tube (18) such that in use air flows between adjacent pairs of tubes (18) and between each side plate (16) and the adjacent tube (18), **characterised in that** heat transfer restrictor means (21) are provided to restrict the transfer of heat from the tube adjacent one of the side plates to the air flow between said one side plate and the said tube.

2. A heat exchanger according to claim 1 wherein the heat transfer restrictor means comprises a restrictor plate (21) arranged on at least one of the side plates (16) to restrict the flow of air between said one side plate (16) and the adjacent tube (18).

3. A heat exchanger according to claim 2 wherein the restrictor plate (21) comprises a blanking plate having cut-out gaps or castellations (22), the blanking plate in use blocking the flow of air between the side plate (16) and the adjacent tube (18) over part of its length and allowing air to flow through the gaps over the remainder of its length.

4. A heat exchanger according to claim 2 wherein the restrictor plate (21) comprises a blanking plate having perforations to restrict the flow of air between the side plate (16) and the adjacent tube (18).

5. A heat exchanger according to claim 2 wherein the restrictor plate comprises a strip of constant width that extends the length of the side plate and over part of the gap between the side pale and the adjacent tube to leave a narrow slit for air to pass through.

6. A heat exchanger according to claim 2 or any claim dependent therefrom wherein the restrictor plate is attached to or forms part of a cooling fan cowl.

## Patentansprüche

1. Wärmetauscher (11), umfassend eine allgemein rechteckige Wärmetauschermatrix (12), einen Einlasswasserkasten (13) und einen Auslasswasserkasten (14), jeweils an einem jeweiligen eines Paars einander gegenüberliegender Seitenränder (15) der Matrix (12) und ein Paar Seitenplatten (16), die jeweils an einem jeweiligen des anderen Paars einander gegenüberliegender Seitenränder (17) der Matrix (12) angeordnet sind, wobei die Matrix (12) eine Zahl von Röhren (18) umfasst, die sich in einer parallelen Anordnung zwischen den Kästen (13, 14) erstrecken, um einen Pfad zum Strömen von Flüssigkeit von einem Kasten zum anderen vorzusehen und Kühlrippen (19) umfasst, die zwischen benachbarten Paaren von Röhren (18) und zwischen jeder Seitenplatte (16) und der benachbarten Röhre (18) angeordnet sind, so dass in Gebrauch Luft zwischen benachbarten Paaren von Röhren (18) und zwischen jeder Seitenplatte (16) und der benachbarten Röhre (18) strömt, **dadurch gekennzeichnet, dass** Wärmeübertragungs-Begrenzermittel (21) vorgesehen sind, um die Übertragung von Wärme von der zu einer der Seitenplatten benachbarten Röhre an den Luftstrom zwischen der genannten einen Seitenplatte und der genannten Röhre zu begrenzen.

2. Wärmetauscher nach Anspruch 1, wobei das Wärmeübertragungs-Begrenzermittel eine Begrenzerplatte (21) umfasst, die an mindestens einer der Seitenplatten (16) angeordnet ist, um die Strömung von Luft zwischen der genannten einen Seitenplatte (16) und der benachbarten Röhre (18) zu begrenzen.

3. Wärmetauscher nach Anspruch 2, wobei die Begrenzerplatte (21) eine Verschlussplatte mit ausgeschnittenen Lücken oder Zinnen (22) umfasst, wobei die Verschlussplatte in Gebrauch die Strömung von Luft zwischen der Seitenplatte (16) und der benachbarten Röhre (18) über einem Teil ihrer Länge blockiert und über dem Rest ihrer Länge Luft durch die Lücken strömen lässt.

4. Wärmetauscher nach Anspruch 2, wobei die Begrenzerplatte (21) eine Verschlussplatte mit Perforationen umfasst, um die Strömung von Luft zwischen der Seitenplatte (16) und der benachbarten Röhre (18) zu begrenzen.

5. Wärmetauscher nach Anspruch 2, wobei die Begrenzerplatte einen Streifen mit konstanter Breite umfasst, der sich entlang der Länge der Seitenplatte und über einen Teil der Lücke zwischen der Seitenplatte und der benachbarten Röhre erstreckt, um einen schmalen Schlitz zum Hindurchgelangen von Luft zu lassen.

6. Wärmetauscher nach Anspruch 2 oder einem der davon abhängigen Ansprüche, wobei die Begrenzerplatte an einer Kühlgebläsehaube angebracht ist oder einen Teil derselben bildet.

## Revendications

1. Echangeur thermique (11) comprenant une matrice d'échange thermique de forme générale rectangulaire (12), une boîte à eau d'admission (13) et une boîte à eau de sortie (14) disposées chacune au niveau d'un bord respectif d'une paire de bords latéraux opposés (15) de la matrice (12) et une paire de plaques latérales (16) disposées chacune au niveau d'un bord respectif de l'autre paire de bords latéraux opposés (17) de la matrice (12), la matrice (12) comprenant un certain nombre de tubes (18) qui s'étendent en un faisceau parallèle entre les boîtes (13, 14) afin de constituer un trajet permettant au liquide de s'écouler d'une boîte à l'autre et des ailettes de refroidissement (19) agencées entre des paires adjacentes de tubes (18) et entre chaque plaque latérale (16) et le tube adjacent (18) de telle sorte que durant l'utilisation l'air s'écoule entre des paires adjacentes de tubes (18) et entre chaque plaque latérale (16) et le tube adjacent (18), **caractérisé en ce que** des moyens restricteurs de transfert de chaleur (21) sont fournis afin de restreindre le transfert de chaleur depuis le tube adjacent à l'une des plaques latérales vers le flux d'air entre ladite une plaque latérale et ledit tube.

2. Echangeur thermique selon la revendication 1, dans lequel le moyen restricteur de transfert de chaleur comprend une plaque de restriction (21) disposée sur au moins l'une des plaques latérales (16) afin de restreindre le flux d'air entre ladite une plaque latérale (16) et le tube adjacent (18).

3. Echangeur thermique selon la revendication 2, dans lequel la plaque de restriction (21) comprend une plaque d'obturation comportant des espaces découpés ou créneaux (22), la plaque d'obturation durant l'utilisation bloquant le flux d'air entre la plaque latérale (16) et le tube adjacent (18) sur une partie de sa longueur et permettant à l'air de passer à travers les espaces sur le reste de sa longueur.

4. Echangeur thermique selon la revendication 2, dans lequel la plaque de restriction (21) comprend une plaque d'obturation comportant des perforations afin de restreindre le flux d'air entre la plaque latérale (16) et le tube adjacent (18).

5. Echangeur thermique selon la revendication 2, dans lequel la plaque de restriction comprend une bande de largeur constante qui s'étend sur toute la longueur de la plaque latérale et sur une partie de l'espace entre la plaque latérale et le tube adjacent afin de laisser une fente mince par laquelle l'air peut passer.

6. Echangeur thermique selon la revendication 2 ou l'une quelconque des revendications en dépendant, dans lequel la plaque de restriction est fixée à un déflecteur de ventilateur ou en fait partie.
